# EUROPEAN PATENT SPECIFICATION

(11) **EP 4 361 457 B1**
(45) Date of publication and mention of the grant of the patent: **11.03.2026**
(21) Application number: 23205243.1
(22) Date of filing: 23.10.2023
(51) Int. Cl.: F16B 21/16, F16B 41/00, F16B 37/14

(54) **A LOCK DEVICE FOR SECURING A FASTENING ELEMENT**
VERRIEGELUNGSVORRICHTUNG ZUR SICHERUNG EINES BEFESTIGUNGSELEMENTS
DISPOSITIF DE VERROUILLAGE POUR FIXER UN ÉLÉMENT DE FIXATION

(30) Priority: 24.10.2022 SE 2251235
(43) Date of publication of application: 01.05.2024
(73) Proprietor: Anchor Lås AB, 633 56 Eskilstuna (SE)
(72) Inventor: CALLEBERG, Johan, 427 37 Billdal (SE)
(74) Representative: Bergenstråhle & Partners AB

(56) References cited:
- EP-A1- 3 704 936
- HU-B- 198 777
- US-B2- 10 000 945
- US-B2- 9 822 554

## Description

### Technical field

The present invention relates generally to a lock device for securing a fastening element attached to a surface.

### Background art

Fastening elements attached to the surface, such as screws or bolts, need to be protected from unauthorized access. To avoid unscrewing the fastening element, said fastening element is often welded to the surface. Welding the fastening element to the surface may provide a good protection from removal of the fastening element, however the welding technique offers no flexibility since special tools are required for welding and for removing said connection. That may be even more challenging in dangerous environments, such as on oil platforms or factories.

Some fastening elements, such as screws, are protected by providing an element that blocks access to the opening of the screw head. Said solutions however do not fully protect the fastening element attached to the surface and do not offer the flexibility since special tools are required for removing the blocking element. Moreover, said solutions are often easy to tamper.

There is a need for a solution where a fastening element can be effectively secured from unauthorized manipulation and at the same time is flexible to allow an authorized user to access the fastening element for maintenance, inspection or substitution, preferably without the need to remove the fastening element or the whole lock device. Said flexibility may also include having a lock device that can also easily be used to secure other objects, such as bicycles, motorcycles and boats.

Patent publication EP 3704936A1 discloses a quick-release connector for connecting a first part constituted by an angling device to a second part constituted by a bank stick or a buzz bar or other angling device. The interlocking and release of the two parts are effected by means of a rotary movement. Another lock device of the prior art is shown in HU198777 B.

### Summary of invention

An object of the present invention is to overcome or at least mitigate one or more of the problems described herein. Another object of the present disclosure is to provide a lock device that can efficiently secure a fastening element attached to a surface and that is only partly removable for accessing the fastening element. Another object of the present disclosure is to provide a lock device that can also be adapted to be attached to any object.

Other features and advantages of the invention will be apparent from the following detailed description, drawings and from the claims.

One or more objects of the disclosure are solved by providing a lock device as claimed in claim 1 for securing a fastening element attached to a surface comprising:
a surface engaging member comprising a hollow shaft for surrounding the fastening element, the hollow shaft defining a longitudinal axis;
a covering member for releasably interlocking onto the surface engaging member, the covering member comprising an outer wall surrounding an inner wall, thereby defining a first space between the outer wall and the inner wall, and a second space within the inner wall;
the inner wall comprising at least one first channel for receiving at least one rolling element, the at least one first channel radially extending from the first space to the second space;
the first space being arranged to receive a rotatable disc comprising at least one groove for receiving the at least one rolling element;
the second space being arranged to receive the hollow shaft of the surface engaging member; and
the covering member further comprising an opening for fitting a locking cylinder, the locking cylinder being operatively connectable to the rotatable disc;
wherein
when the locking cylinder is positioned into an unlocked state, the rotatable disc is rotated about the inner wall of the covering member, such that the at least one groove of the rotatable disc is radially aligned with the at least one first channel of the inner wall, thereby allowing the at least one rolling element to radially move outwards in relation to the longitudinal axis, from an intersection between the hollow shaft and the at least one first channel into the at least one groove of the rotatable disc, thereby unlocking the surface engaging member from the covering member; and
when the locking cylinder is positioned into a locked state, the rotatable disc is rotated about the inner wall of the covering member, such that the at least one groove of the rotatable disc is radially unaligned with the at least one first channel of the inner wall, thereby allowing the at least one rolling element to radially move inwards in relation to the longitudinal axis, from the at least one groove of the rotatable disc to the intersection between the hollow shaft and the at least one first channel, thereby locking the surface engaging member to the covering member.

The lock device advantageously provides a simple and effective way to protect a fastening element attached to a surface, such as a screw, a nut, a bolt, a stud, a rivet, an anchor, a nail or an insert. Furthermore, the fastening element may be readily accessible to an authorized user by unlocking the lock device and removing the covering member of the lock device. By doing so, the fastening element can be at least partly inspected without the need of being removed. The lock device also advantageously provides a device wherein the whole lock device does not need to be removed for accessing the fastening element, which simplifies maintenance and/or inspection. Another advantage of said lock device is that, in case of damage to the covering member, only said covering member may be quickly substituted without the need of dismounting the whole lock device from the fastening element.

Furthermore, the lock device may be fixed to the fastening element by the connection between the surface engaging member of the lock device and the fastening element. For instance, the fastening element may be a bolt and a nut, wherein the hollow shaft of the covering member is positioned to surround the bolt, and both the hollow shaft and the bolt are fixed to each other by screwing the nut to the bolt.

The surface engaging member comprises a base, and the hollow shaft perpendicularly extends from the base of the surface engaging member. One exemplary effect thereof is that the hollow shaft may extend from the base of the surface engaging member such as to completely cover the fastening element, thereby providing an extra layer of safety. Another effect thereof is that the hollow shaft may be either adapted to receive a specific type or size of fastening element or may be adapted to receive a variety of fastening elements. The hollow shaft may comprise threads therein. Moreover, the hollow shaft may comprise an open end such that the fastening element and its nut are accessible, thereby providing an easier access to the fastening element when the covering member is removed therefrom. Moreover, the base of the surface engaging member may have a substantially cylindrical outer shape.

The hollow shaft further comprises an annular groove adapted for receiving the at least one rolling element. The annular groove may radially extend in relation to the longitudinal axis. One effect thereof is that the annular groove fixes the at least one rolling member in place when the lock device is in the lock state. The annular groove may be positioned closer to or at the end of the hollow shaft opposite to the base of the surface engaging member.

The rotatable disc may radially surround the inner wall of the covering member. One effect thereof is that the rotatable disc may be rotated in relation to the inner wall of the covering member, thereby aligning or misaligning the at least one groove of the rotatable disc to the at least one first channel of the inner wall.

The outer wall may radially surround the rotatable disc. One effect thereof is that the rotatable disc is not accessible from the outside, when the lock device is assembled, which advantageously avoids that the rotatable disc is for instance rotated without a suitable actuator actuating the locking cylinder. Moreover, the outer wall may not move when the rotatable disc is rotated.

The at least one groove of the rotatable disc and the at least one first channel of the inner wall may be radially aligned on the same plane. Said same plane may be substantially perpendicular in relation to the longitudinal axis. One exemplary effect thereof is that said alignment facilitates the movement of the at least one rolling element from the at least one groove of the rotatable disc to the at least one first channel of the inner wall, and vice versa. When the lock device is in the unlocked state, the at least one rolling element may roll to the at least one groove of the rotatable disc. In case said rolling does not fully occur, the at least one rolling element may roll to the at least one groove of the rotatable disc when the covering member is moved away from the surface engaging member.

Furthermore, in the unlocked state, the at least one rolling element may be partly in the at least one groove of the rotatable disc and partly in the at least one first channel. In other words, the at least one rolling member is not completely removed from the at least one first channel in the unlocked state.

In the locked state, one rolling element may be partly in the annular groove of the hollow shaft and partly in the at least one first channel. In other words, the at least one rolling member is not completely removed from the at least one first channel in the locked state.

The at least one first channel may comprise a stop. One exemplary effect thereof is that the at least one rolling element does not fall from the at least one first channel when the covering member is removed from the surface engaging member. Thus, the covering member may be easily re-assembled when securing the fastening element is required. Any element that avoids the removal of the at least one rolling element from the at least one first channel when the covering member is removed from the surface engaging member may be used. In an alternative embodiment, the at least one first channel may be tapered towards the second space of the covering member such that the at least one rolling element may be partially exposed to the second space (or the annular groove of the hollow shaft inserted therein) without leaving the at least one first channel.

The outer wall of the covering member may further comprise at least one second channel arranged to radially align with the at least one first channel such that the at least one rolling element is movable from the at least one second channel to the at least one first channel, provided that the rotatable disc is not inserted into the first space of the covering member. On exemplary effect thereof is that the assembly of the lock device is easier to perform.

The at least one rolling element may be a sphere. One exemplary effect thereof is that a sphere may easily roll from the at least one groove of the rotatable disc to the at least one first channel of the inner wall and vice versa, when the lock device is moved from an unlocked stated to a locked state and vice versa. The sphere is preferably made of metal or an alloy, such as steel, however any other resistant materials known by the skilled person may be used.

The locking cylinder may be substantially parallel to the longitudinal axis of the hollow shaft and arranged at least partially between the outer wall and the inner wall. One exemplary effect thereof is that the opening for inserting an actuator into the locking cylinder is easily accessible since said opening is pointed towards the same direction as the fastening/unfastening direction of the fastening element. In other words, the opening of the locking cylinder is in the opposite direction in relation to the surface where the fastening element is attached.

The surface engaging member of the lock device may further comprise a drain. Said drain extends from the inner part of the surface engaging member to the surface where the fastening element is attached.

The locking cylinder may further comprise a cam operatively connecting the locking cylinder with the rotatable disc. The cam may be any element that extends off the locking cylinder and operatively engages with the rotatable disc, such as a tooth or a leaver. The cam is arranged to transfer the rotational movement of the locking cylinder to the rotatable cylinder, thereby operatively connecting said locking cylinder to said rotatable disc. The cam and the rotatable disc may be radially aligned in relation to the longitudinal axis when the lock device is assembled. In some embodiments, the rotational axis of the locking cylinder is substantially parallel to the rotational axis of the rotatable disc.

The lock device may further comprise a shackle. One exemplary effect thereof is that the lock device may also be used as a padlock. The presence of a shackle advantageously provides an even more flexible lock device that can be both used for securing a fastening element attached to a surface and/or as a padlock device. In some situations, it may be advantageous to have the lock device securing a fastening element attached to a surface and simultaneously to have the shackle of the lock device further securing another object. The shackle may be any shackle known in the art.

The unlocked and locked states may be achieved by rotating the locking cylinder with an actuator, such as a key. The actuator may be any suitable element suitable for securely rotating the locking cylinder. The locking cylinder may be actuated by a unique actuator or by different actuators, such as different keys. The actuator may be an electronic actuator or a temperature sensitive actuator, such as a bimetallic actuator. The skilled person knows which metals may be used to allow rotation of the bimetallic actuator at certain temperatures. In some embodiments, the opening of the locking cylinder for receiving an actuator is covered, thereby protecting the locking cylinder from water and/or dust. In some embodiments, the locking cylinder rotates about 90 degrees when actuated.

The surface engaging member and the covering member may have a substantially cylindrical outer wall.

The outer wall of the covering member may be rotatable about the longitudinal axis of the hollow shaft. One exemplary effect thereof is that the rotatable outer wall improves the safety of the lock device by, for instance, making it more difficult to bore the lock device with a drill. In some embodiments, the outer wall may be surrounded by a case, which covers the at least one second channel from exposure to the outside environment. In this embodiment, the case is rotatable about the longitudinal axis of the hollow shaft, while the outer wall of the covering member is not movable. In an alternative embodiment, both the outer wall and the case are rotatable about the longitudinal axis of the hollow shaft.

The outer wall, the inner wall, the rotatable disc and hollow shaft may be coaxially arranged. Furthermore, the outer wall, the inner wall, the rotatable disc and hollow shaft may be coaxially arranged in relation to the longitudinal axis of the hollow shaft. One effect thereof is that the lock device may be easily manufactured and assembled about the longitudinal axis of the hollow shaft of the surface engaging member.

The outer wall, the inner wall, the rotatable disc and hollow shaft may have an annular shape and/or cross section. One exemplary effect thereof is that the elements may be easily assembled. For instance, the annular shape of the outer wall and the inner wall generates an annular first space between the outer wall and the inner wall, wherein the rotatable disc is inserted therein. Furthermore, said annular shape also generates a circular second space within the inner wall, wherein the hollow shaft may be inserted therein. Further, the annular shape of the hollow shaft provides a circular space within said hollow shaft, wherein the fastening element is inserted therein.

The lock device according to the disclosure may be made of any suitable hard or resistive material known by the skilled person. Furthermore, the lock device as disclosed is preferably made of a metal or an alloy.

The lock device as described above may be attached to the surface of any object, such as bicycles, boats, motorcycles or any other object. Said attachment may be achieved by the lock device being attached to a fastening element introduced into the object and/or by the shackle of the lock device.

### Brief description of drawings

The invention is now described, by way of example, with reference to the accompanying drawings, in which:
Fig. 1a schematically illustrates a surface engaging member lateral view, and Fig. 1b schematically illustrates a surface engaging member cross sectional view, according to an exemplary embodiment.
Fig. 2a schematically illustrates a covering member lateral view, and Fig. 2b schematically illustrates a covering member cross sectional view, according to an exemplary embodiment.
Fig. 3 schematically illustrates a rotatable disc comprising grooves, according to an exemplary embodiment.
Fig. 4 schematically illustrates a lock device comprising a shackle, according to an exemplary embodiment.
Fig. 5a schematically illustrates a cross sectional view of the lock device in a locked state, and Fig. 5b schematically illustrates a cross sectional view of the lock device in an unlocked state, according to an exemplary embodiment.
Fig. 6 schematically illustrates a cross sectional view of the covering part without a rotatable disc and at least one rolling element, according to an exemplary embodiment.
Fig. 7a schematically illustrates a cross sectional view of the lock device in an unlocked state, and Fig. 7b schematically illustrates a cross sectional view of the lock device securing a fastening element, according to an exemplary embodiment.

### Description of embodiments

In the following, a detailed description of the lock device 1 is provided.

The term "unlocked state" is to be understood as a state where the covering member 20 may be separated from the surface engaging member 10.

The term "locked state" is to be understood as a state where the covering member 20 and the surface engaging member 10 are interlocked.

The term "rolling element" is to be understood as any suitable element capable of being moved by rolling and/or sliding, when the lock device 1 is changed from an unlocked state to a locked state, and vice versa. The rolling element may be for instance substantially spherical (such as a sphere), substantially cylindrical or oval.

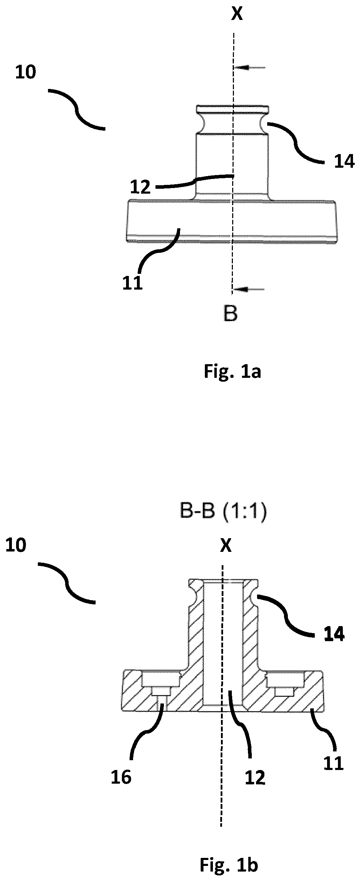

As illustrated in Fig. 1a, the lock device 1 comprises a surface engaging member 10 comprising a hollow shaft 12 for surrounding a fastening element, the hollow shaft 12 defining a longitudinal axis X. The surface engaging member 10 comprises a base 11 for contacting the surface. The base 11 may be substantially parallel to the surface and is arranged to surround a region around the fastening element. The hollow shaft 12 extends from the base 11 of the surface engaging member 10 and is arranged to surround or fully cover the fastening element. The hollow shaft 12 may be substantially perpendicular to the base 11 of the surface engaging member 10. Moreover, the hollow shaft 12 may be concentrically arranged in relation to the base 11 of the surface engaging member 10.

The hollow shaft 12 comprises an annular groove 14 around the outer surface of the hollow shaft 12. The annular groove 14 is radially arranged in relation to the longitudinal axis X. Moreover, the annular groove 14 may be arranged anywhere in the extension of the hollow shaft 12, however it is preferably located at an end of the hollow shaft 12 opposite to the end of the hollow shaft 12 connected to the base 11 of the surface engaging member 10.

As illustrated in Fig. 1b, the surface engaging member 10 comprises a hollow shaft 12 having an inner space for receiving the fastening element. Said inner space may comprise threads mating with the threads of the fastening element. Moreover, the surface engaging member 10 further comprises a drain 16, which may be for instance a conduit, a pipe or any suitable drain 16 known by the skilled person. In some embodiments, the surface engaging member 10 comprises two or more drains 16.

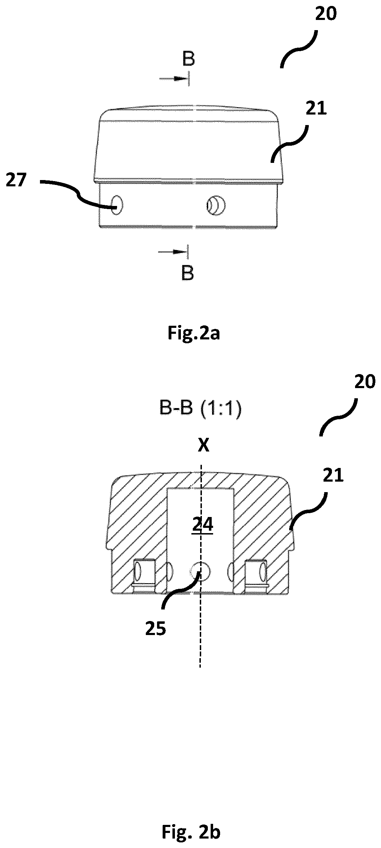

As illustrated in Fig. 2a and Fig. 2b., the lock device 1 comprises a covering member 20 for releasably interlocking onto the surface engaging member 10. The covering member 20 comprises an outer wall 21 that radially surrounds a first space 22 (not shown), which has an annular shape The outer wall 21 comprises at least one second channel 27 arranged to radially surround the first space 22 of the covering member 20. The at least one second channel 27 is a through hole that connects the external environment to the first space 22. When the covering member 20 is rested on the surface engaging member 10, the second space 24 of the covering member receives the hollow shaft 12 of the surface engaging member 10.

Furthermore, the covering member 20 comprises at least one first channel 25 arranged in the inner wall 23 of the covering member 20. The at least one first channel 25 is a through hole that connects the second space 24 to the first space 22. The at least one first channel 25 and the at least one second channel 27 are radially aligned in relation to the longitudinal axis X of the hollow shaft 12. In some embodiments, the outer wall 21 comprising the at least one second channel 27 may be covered by a case, which avoids external access to the at least one second channel 27 and which can freely rotate in relation to the longitudinal axis X of the hollow shaft 12. The outer wall 21 of the covering member 20 has a substantially cylindrical shape.

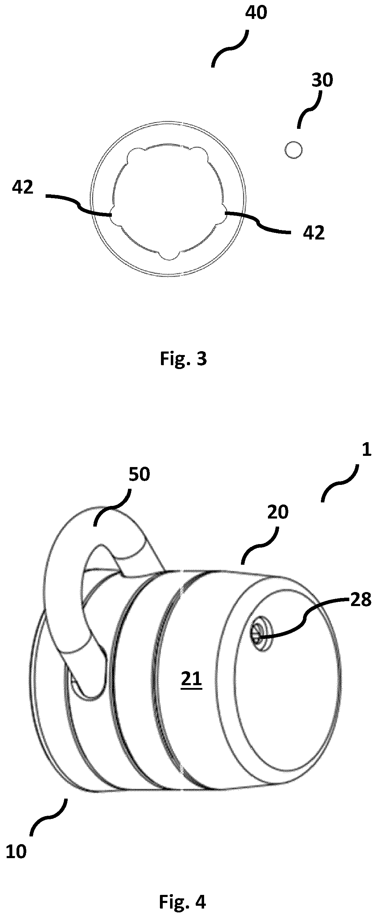

Fig. 3 illustrates a rotatable disc 40 for inserting into the first space 22 of the covering member 20. The rotatable disc 40 comprises at least one groove 42 for receiving at least one rolling element 30, the at least one groove 42 facing the center of the rotatable disc 40. In this embodiment, the rotatable disc has five grooves 42, however the rotatable disc 40 may comprise more or less grooves 42, depending on the configuration, size and/or price range of the lock device 1. Furthermore, the rotatable disc 40 has an annular shape such that an inner space is defined. The at least one groove 42 is arranged to be facing the inner space of the rotatable disc 40, preferably in the same plane as the at least one first channel 25.

The rotatable disc 40 may be arranged to rotate clockwise and/or counterclockwise when the locking cylinder 60 is moved to an unlocked/locked state. The at least one groove 42 is adapted to receive part of the at least one rolling element 30 within said at least one groove 42.

Fig. 4 illustrates the lock device 1 fully assembled, i.e., the surface engaging member 10 being interlocked with the covering member 20. The lock device 1 comprises an outer surface 21 divided in modules connected on top of each other. For instance, the outer surface 21 may have a module comprising an opening 28 for fitting a locking cylinder 60, a module comprising the rotatable disc 40 and a module comprising a shackle 50. The opening 28 for fitting a locking cylinder 60 is preferably faced in the opposite direction in relation to the base 11 of the surface engaging member 10, such that an actuator may be easily engaged with the locking cylinder 60 therein.

The shackle 50 may be arranged substantially perpendicular in relation to the longitudinal axis X of the hollow shaft 12 of the surface engaging member 10. In some embodiments, more than one shackle 50 may be arranged and said shackle(s) 50 may be arranged in any position in relation to the longitudinal axis X.

The lock device 1 may have a substantially cylindrical outer shape, and the outer wall 21 of the covering member 20 may be rotatable about the longitudinal axis X of the hollow shaft 12. The outer wall 21 may be covered by a cover, which is rotatable. The substantial cylindrical outer shape of the outer wall 21 and the feature that it is rotatable and/or that the case is rotatable increase the safety of the lock device 1 since it becomes more difficult to bore a hole into the covering member 20.

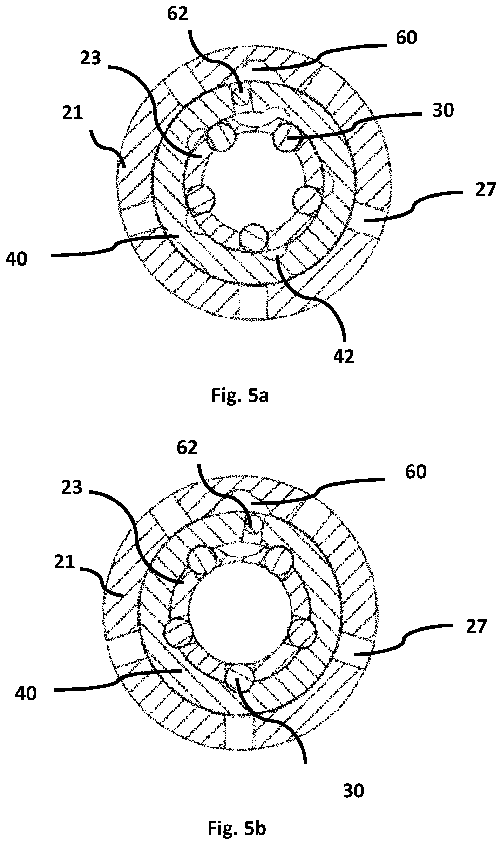

Fig. 5a illustrates a cross sectional view of the lock device 1 in a locked state. The lock device 1 comprises an outer wall 21 comprising at least one second channel 27 substantially perpendicular and facing the longitudinal axis X (i.e., the center of the device). The outer wall 21 radially surrounds the rotatable disc 40 comprising at least one groove 42, which is empty in said locked state.

Furthermore, the rotatable disc 40 radially surrounds the inner wall 23 of the covering member 20. The inner wall 23 comprises at least one first channel 25 having at least one rolling element 30 therein. The size of the at least one first channel 25 is adapted to contain the at least one rolling element 30 in both the unlocked and locked states. In other words, when the at least one rolling element 30 is moved from the unlocked state to the locked state (and vice versa), said at least one rolling element 30 is always at least partly inside the at least one first channel 25, i.e., the at least one rolling element 30 is not fully removed from the at least one first channel 25.

In the locked state as shown in Fig. 5a, it can be seen that the locking cylinder 60 comprising a cam 62 and operatively connected to the rotatable disc 40 has rotated said rotatable disc 40 such that the at least one groove 42 of the rotatable disc 40 is radially unaligned with the at least one first channel 25 of the inner wall 23.

Additionally, the at least one rolling element 30 is positioned at the interface between the at least one first channel 25 and the annular groove 14 of the hollow shaft 12 of the surface engaging member 10. In other words, the at least one rolling element 30 is at an intersection between the at least one first channel 25 and the annular groove 14 of the hollow shaft 12, thereby locking the covering member 20 to the surface engaging member 10. In said locking state, the covering member 20 is not movable in an axial direction in relation to the longitudinal axis X. Said intersection wherein the at least one rolling element 30 is positioned may be called a shear line.

Fig. 5b illustrates a cross sectional view of the lock device 1 in an unlocked state. In said unlocked state, the at least one rolling element 30 is radially moved outward in relation to the longitudinal axis X, from the intersection between annular groove 14 of the hollow shaft 12 and the at least one first channel 25 partly into the at least one groove 42 of the rotatable disc 40. When the rotatable disc 40 is rotated to the unlocked state, the at least one groove 42 of the rotatable disc 40 radially aligns with the at least one first channel 25, which allows the transfer of the at least one rolling element 30 partly into the at least one groove 42 of the rotatable disc 40. Said transfer may be aided by lifting the covering member 20 away from the surface engaging member 10, since said lifting promotes a sliding of the at least one rolling element 30 on the surface of the annular groove 14 of the hollow shaft 12 into the at least one first channel 25 and consequently into the at least one groove 42 of the rotatable disc 40.

In the embodiments as shown in Fig. 5a and Fig. 5b, there are five rolling elements 30 inserted into five first channels 25 radially surrounded by a rotatable disc 40 having five grooves 42. When the locking cylinder 60 is moved from an unlocked state to a locked state (and vice versa), the five rolling elements 30 are moved simultaneously to and from the five grooves 42 of the rotatable disc 40. However, a different number of rolling elements 30, first channels 25 and grooves 42 may be used, depending on the size of the lock device 1, the level of safety required and/or the manufacturing cost desired for the lock device 1.

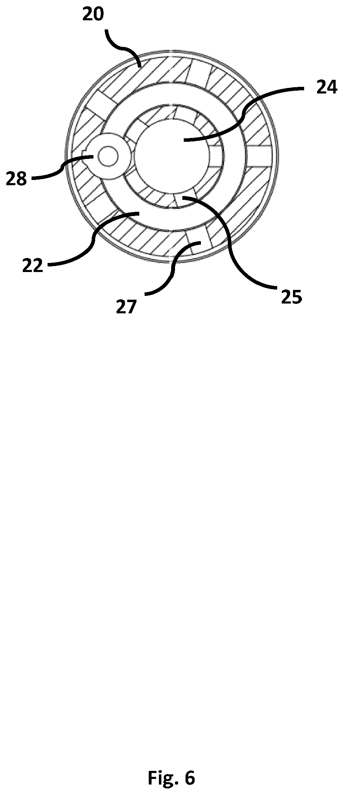

Fig. 6 illustrates a cross sectional view of the covering member 20 without the presence of the at least one rolling element 30 and the rotatable disc 40. The absence of the at least one rolling element 30 allows visualizing the at least one first channel 25, where said at least one rolling element 30 is positioned when the lock device 1 is fully assembled. The at least one first channel 25 is radially aligned with the at least one second channel 27, whereby the at least one rolling element 30 is inserted and moved into the at least one first channel 25. When the rotatable disc 40 is positioned in the first space 22, the at least one rolling element 30 is blocked and cannot be removed from the at least one first channel 25. The at least one rolling element 30 cannot be removed from the other open side of the at least one first channel 25 due to a stop (not shown). When the lock device 1 is fully assembled, the at least one rolling element 30 may only partly move out of the at least one first channel 25 in the direction of the annular groove 14 of the hollow shaft 12 or the at least one groove 42 of the rotatable disc 40.

As described elsewhere herein, the outer wall 21 comprising at least one second channel 27 may be covered by a case such that the at least one second channel 27 is not visible nor accessible from the outside. Moreover, said case may be rotatable about the longitudinal axis X.

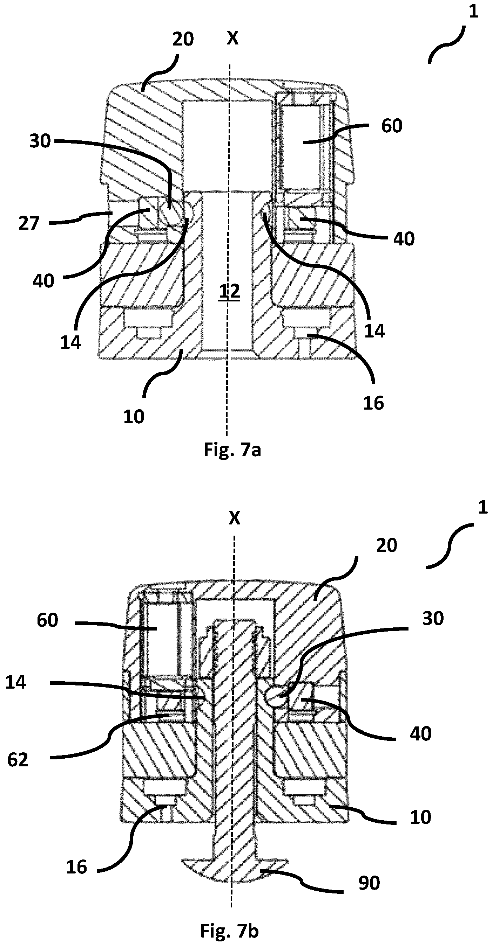

Fig. 7a illustrates a cross sectional view of the lock device 1 fully assembled and in an unlocked state. The locking cylinder 60 is positioned substantially parallel to the longitudinal axis X of the hollow shaft 12. Furthermore, the annular groove 14 of the hollow shaft 12 is positioned in the same plane as the at least one first channel 25, said plane being substantially perpendicular to the longitudinal axis X. It is clear from Fig. 7a that, in the unlocked state, the at least one rolling element 30 is radially moved outwards in relation to the longitudinal axis X and away from the intersection between the at least one first channel 25 and the annular groove 14 of the hollow shaft 12. In this unlocked state, the covering member 20 can be moved away from the surface engaging member 10, thereby exposing the fastening element.

Fig. 7b illustrates a cross sectional view of the lock device 1 fully assembled and securing a fastening element 90. The fastening element 90 in this embodiment is a bolt and a nut 90. The fastening element 90 is attached to a surface such that the head is positioned in the surface. The fastening element 90 is surrounded by the hollow shaft 12 of the surface engaging member 10, except for the upper end where the nut is fastened, thereby fixing the surface engaging member 10 to the fastening element 90. The exposure of the nut may ease its removal, while keeping the surface engaging member 10 secured in place.

It is clear from the embodiment of Fig. 7b that the lock device 1 is in a locked state. In this case, the at least one rolling element 30 is positioned such that part of said at least one rolling element 30 is positioned in the annular groove 14 of the hollow shaft 12 and the other part of said at least one rolling element 30 is positioned in the at least one first channel 25, thereby locking the surface engaging member 10 to the covering member 20.

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

Unless expressly described to the contrary, each of the preferred features described herein can be used in combination with any and all of the other herein described preferred features, as long as these combinations fall within the wording of the appended claims.

## Claims

1. A lock device (1) for securing a fastening element attached to a surface comprising:
a surface engaging member (10) comprising a base (11) and a hollow shaft (12) extending from the base (11) for surrounding the fastening element, the hollow shaft (12) defining a longitudinal axis (X);
a covering member (20) for releasably interlocking onto the surface engaging member (10), the covering member (20) comprising an outer wall (21) surrounding an inner wall (23), thereby defining a first space (22) between the outer wall (21) and the inner wall (23), and a second space (24) within the inner wall (23);
at least one rolling element (30);
the inner wall (23) comprising at least one first channel (25) for receiving the at least one rolling element (30), the at least one first channel (25) radially extending from the first space (22) to the second space (24);
a rotatable disc (40);
the first space (22) being arranged to receive the rotatable disc (40) comprising at least one groove (42) for receiving the at least one rolling element (30); and
the second space (24) being arranged to receive the hollow shaft (12) of the surface engaging member (10);
a locking cylinder (60);
the covering member (20) further comprising an opening (28) for fitting the locking cylinder (60), the locking cylinder (60) being operatively connectable to the rotatable disc (40);
wherein
when the locking cylinder (60) is positioned into an unlocked state, the rotatable disc (40) is rotated about the inner wall (23) of the covering member (20), such that the at least one groove (42) of the rotatable disc (40) is radially aligned with the at least one first channel (25) of the inner wall (23), thereby allowing the at least one rolling element (30) to radially move outwards in relation to the longitudinal axis (X), from an intersection between the hollow shaft (12) and the at least one first channel (25) into the at least one groove (42) of the rotatable disc (40), thereby unlocking the surface engaging member (10) from the covering member (20); and
when the locking cylinder (60) is positioned into a locked state, the rotatable disc (40) is rotated about the inner wall (23) of the covering member (20), such that the at least one groove (42) of the rotatable disc (40) is radially unaligned with the at least one first channel (25) of the inner wall (23), thereby allowing the at least one rolling element (30) to radially move inwards in relation to the longitudinal axis (X), from the at least one groove (42) of the rotatable disc (40) to the intersection between the hollow shaft (12) and the at least one first channel (25), thereby locking the surface engaging member (10) to the covering member (20), and wherein the hollow shaft (12) further comprises an annular groove (14) adapted for receiving the at least one rolling element (30).

2. The lock device (1) according to claim 1, wherein the hollow shaft (12) extends perpendicularly from the base (11) of the surface engaging member (10).

3. The lock device (1) according to any one of the preceding claims, wherein the rotatable disc (40) radially surrounds the inner wall (23) of the covering member (20).

4. The lock device (1) according to any one of the preceding claims, wherein the outer wall (21) radially surrounds the rotatable disc (40).

5. The lock device (1) according to any one of the preceding claims, wherein the at least one groove (42) of the rotatable disc (40) and the at least one first channel (25) of the inner wall (23) are radially aligned on the same plane.

6. The lock device (1) according to any one of the preceding claims, wherein the at least one first channel (25) comprises a stop.

7. The lock device (1) according to any one of the preceding claims, wherein the outer wall (21) of the covering member (20) further comprises at least one second channel (27) arranged to radially align with the at least one first channel (25) such that the at least one rolling element (30) is movable from the at least one second channel (27) to the first channel (25), provided that the rotatable disc (40) is not inserted into the first space (22) of the covering member (20).

8. The lock device (1) according to any one of the preceding claims, wherein the at least one rolling element (30) is a sphere.

9. The lock device (1) according to any one of the preceding claims, wherein the locking cylinder (60) is substantially parallel to the longitudinal axis (X) of the hollow shaft (12) and arranged at least partially between the outer wall (21) and the inner wall (23).

10. The lock device (1) according to any one of the preceding claims, wherein the surface engaging member (10) further comprises a drain (16).

11. The lock device (1) according to any one of the preceding claims, locking cylinder (60) further comprises a cam (62) operatively connecting the locking cylinder (60) with the rotatable disc (40).

12. The lock device (1) according to any one of the preceding claims, wherein the lock device (20) further comprises a shackle (50).

13. The lock device (1) according to any one of the preceding claims, wherein the unlocked state and locked state are achieved by rotating the locking cylinder (60) with an actuator, such as a key.

14. The lock device (1) according to any one of the preceding claims, wherein the surface engaging member (10) and the covering member (20) have a substantially cylindrical outer wall (21).

15. The lock device (1) according to any one of the preceding claims, wherein the outer wall (21) of the covering member (20) is rotatable about the longitudinal axis (X) of the hollow shaft (12).

16. The lock device (1) according to any one of the preceding claims, wherein the outer wall (21), the inner wall (23), the rotatable disc (40) and hollow shaft (12) are coaxially arranged.

17. The lock device (1) according to any one of the preceding claims, wherein the outer wall (21), the inner wall (23), the rotatable disc (40) and hollow shaft (12) have an annular shape.

## Patentansprüche

1. Verriegelungsvorrichtung (1) zum Sichern eines Befestigungselements, das an einer Oberfläche angebracht ist, umfassend:
ein Oberflächeneingriffselement (10), umfassend eine Basis (11) und eine Hohlwelle (12), die sich von der Basis (11) erstreckt, um das Befestigungselement zu umgeben, wobei die Hohlwelle (12) eine Längsachse (X) definiert;
ein Abdeckelement (20) zum lösbaren Verriegeln mit dem Oberflächeneingriffselement (10), wobei das Abdeckelement (20) eine Außenwand (21) umfasst, die eine Innenwand (23) umgibt, wodurch ein erster Raum (22) zwischen der Außenwand (21) und der Innenwand (23) und ein zweiter Raum (24) innerhalb der Innenwand (23) definiert wird;
mindestens ein Wälzelement (30);
wobei die Innenwand (23) mindestens einen ersten Kanal (25) zur Aufnahme des mindestens einen Wälzelements (30) umfasst, wobei sich der mindestens eine erste Kanal (25) radial von dem ersten Raum (22) zu dem zweiten Raum (24) erstreckt; eine drehbare Scheibe (40);
wobei der erste Raum (22) angeordnet ist, um die drehbare Scheibe (40) aufzunehmen, die mindestens eine Nut (42) zum Aufnehmen des mindestens einen Wälzelements (30) umfasst; und
wobei der zweite Raum (24) angeordnet ist, um die Hohlwelle (12) des Oberflächeneingriffselements (10) aufzunehmen;
einen Verriegelungszylinder (60);
das Abdeckelement (20) weiter eine Öffnung (28) zum Anbringen des Verriegelungszylinders (60) umfasst, wobei der Verriegelungszylinder (60) mit der drehbaren Scheibe (40) wirkverbindbar ist;
wobei
wenn der Verriegelungszylinder (60) in einem entriegelten Zustand positioniert ist, die drehbare Scheibe (40) um die Innenwand (23) des Abdeckelements (20) gedreht wird, so dass die mindestens eine Nut (42) der drehbaren Scheibe (40) radial mit dem mindestens einen ersten Kanal (25) der Innenwand (23) ausgerichtet ist, wodurch es dem mindestens einen Wälzelement (30) ermöglicht wird, sich in Bezug auf die Längsachse (X) von einem Schnittpunkt zwischen der Hohlwelle (12) und dem mindestens einen ersten Kanal (25) in die mindestens eine Nut (42) der drehbaren Scheibe (40) radial nach außen zu bewegen, wodurch das Oberflächeneingriffselement (10) von dem Abdeckelement (20) entriegelt wird; und
wenn der Verriegelungszylinder (60) in einem verriegelten Zustand positioniert ist, die drehbare Scheibe (40) um die Innenwand (23) des Abdeckelements (20) gedreht wird, sodass die mindestens eine Nut (42) der drehbaren Scheibe (40) radial nicht mit dem mindestens einen ersten Kanal (25) der Innenwand (23) ausgerichtet ist, wodurch es dem mindestens einen Wälzelement (30) ermöglicht wird, sich in Bezug auf die Längsachse (X) von der mindestens einen Nut (42) der drehbaren Scheibe (40) zum Schnittpunkt zwischen der Hohlwelle (12) und dem mindestens einen ersten Kanal (25) radial nach innen zu bewegen, wodurch das Oberflächeneingriffselement (10) an dem Abdeckelement (20) verriegelt wird, und wobei die Hohlwelle (12) weiter eine ringförmige Nut (14) umfasst, die zum Aufnehmen des mindestens einen Wälzelements (30) angepasst ist.

2. Verriegelungsvorrichtung (1) nach Anspruch 1, wobei sich die Hohlwelle (12) senkrecht von der Basis (11) des Oberflächeneingriffselements (10) erstreckt.

3. Verriegelungsvorrichtung (1) nach einem der vorstehenden Ansprüche, wobei die drehbare Scheibe (40) die Innenwand (23) des Abdeckelements (20) radial umgibt.

4. Verriegelungsvorrichtung (1) nach einem der vorstehenden Ansprüche, wobei die Außenwand (21) die drehbare Scheibe (40) radial umgibt.

5. Verriegelungsvorrichtung (1) nach einem der vorstehenden Ansprüche, wobei die mindestens eine Nut (42) der drehbaren Scheibe (40) und der mindestens eine erste Kanal (25) der Innenwand (23) radial auf derselben Ebene ausgerichtet sind.

6. Verriegelungsvorrichtung (1) nach einem der vorstehenden Ansprüche, wobei der mindestens eine erste Kanal (25) einen Anschlag umfasst.

7. Verriegelungsvorrichtung (1) nach einem der vorstehenden Ansprüche, wobei die Außenwand (21) des Abdeckelements (20) weiter mindestens einen zweiten Kanal (27) umfasst, der so angeordnet ist, dass er radial mit dem zumindest einen ersten Kanal (25) derart ausgerichtet ist, dass das zumindest eine Wälzelement (30) von dem zumindest einen zweiten Kanal (27) zu dem ersten Kanal (25) bewegbar ist, sofern die drehbare Scheibe (40) nicht in den ersten Raum (22) des Abdeckelements (20) eingesetzt ist.

8. Verriegelungsvorrichtung (1) nach einem der vorstehenden Ansprüche, wobei das mindestens eine Wälzelement (30) eine Kugel ist.

9. Verriegelungsvorrichtung (1) nach einem der vorstehenden Ansprüche, wobei der Verriegelungszylinder (60) im Wesentlichen parallel zur Längsachse (X) der Hohlwelle (12) ist und zumindest teilweise zwischen der Außenwand (21) und der Innenwand (23) angeordnet ist.

10. Verriegelungsvorrichtung (1) nach einem der vorstehenden Ansprüche, wobei das Oberflächeneingriffselement (10) weiter einen Ablauf (16) umfasst.

11. Verriegelungsvorrichtung (1) nach einem der vorstehenden Ansprüche, Verriegelungszylinder (60) weiter einen Nocken (62) umfasst, der den Verriegelungszylinder (60) mit der drehbaren Scheibe (40) wirkverbindet.

12. Verriegelungsvorrichtung (1) nach einem der vorstehenden Ansprüche, wobei die Verriegelungsvorrichtung (20) weiter einen Bügel (50) umfasst.

13. Verriegelungsvorrichtung (1) nach einem der vorstehenden Ansprüche, wobei der entriegelte Zustand und der verriegelte Zustand durch Drehen des Verriegelungszylinders (60) mit einem Aktor, wie etwa einem Schlüssel, erreicht werden.

14. Verriegelungsvorrichtung (1) nach einem der vorstehenden Ansprüche, wobei das Oberflächeneingriffselement (10) und das Abdeckelement (20) eine im Wesentlichen zylindrische Außenwand (21) aufweisen.

15. Verriegelungsvorrichtung (1) nach einem der vorstehenden Ansprüche, wobei die Außenwand (21) des Abdeckelements (20) um die Längsachse (X) der Hohlwelle (12) drehbar ist.

16. Verriegelungsvorrichtung (1) nach einem der vorstehenden Ansprüche, wobei die Außenwand (21), die Innenwand (23), die drehbare Scheibe (40) und die Hohlwelle (12) koaxial angeordnet sind.

17. Verriegelungsvorrichtung (1) nach einem der vorstehenden Ansprüche, wobei die Außenwand (21), die Innenwand (23), die drehbare Scheibe (40) und die Hohlwelle (12) eine ringförmige Form aufweisen.

## Revendications

1. Dispositif de verrouillage (1) destiné à fixer un élément de fixation attaché à une surface comprenant :
un élément (10) de mise en prise de surface comprenant une base (11) et un arbre creux (12) s'étendant depuis la base (11) pour entourer l'élément de fixation, l'arbre creux (12) définissant un axe longitudinal (X) ; un élément de recouvrement (20) destiné à se verrouiller de manière amovible sur l'élément (10) de mise en prise de surface,
l'élément de recouvrement (20) comprenant une paroi externe (21) entourant une paroi interne (23), définissant ainsi un premier espace (22) entre la paroi externe (21) et la paroi interne (23), et un second espace (24) au sein de la paroi interne (23) ;
au moins un élément roulant (30) ; la paroi interne (23) comprenant au moins un premier canal (25) destiné à recevoir l'au moins un élément roulant (30), l'au moins un premier canal (25) s'étendant radialement du premier espace (22) au second espace (24) ; un disque rotatif (40) ;
le premier espace (22) étant agencé pour recevoir le disque rotatif (40) comprenant au moins une rainure (42) destinée à recevoir l'au moins un élément roulant (30) ; et le second espace (24) étant agencé pour recevoir l'arbre creux (12) de l'élément (10) de mise en prise de surface ; un cylindre de verrouillage (60) ;
l'élément de recouvrement (20) comprenant en outre une ouverture (28) destinée à un emboîtement du cylindre de verrouillage (60), le cylindre de verrouillage (60) pouvant être fonctionnellement relié au disque rotatif (40) ;
dans lequel, lorsque le cylindre de verrouillage (60) est positionné dans un état déverrouillé, le disque rotatif (40) tourne autour de la paroi interne (23) de l'élément de recouvrement (20), de telle sorte que l'au moins une rainure (42) du disque rotatif (40) soit radialement alignée avec l'au moins un premier canal (25) de la paroi interne (23),
permettant ainsi à l'au moins un élément roulant (30) de se déplacer radialement vers l'extérieur par rapport à l'axe longitudinal (X), depuis une intersection entre l'arbre creux (12)
et l'au moins un premier canal (25) dans l'au moins une rainure (42) du disque rotatif (40), déverrouillant ainsi l'élément (10) de mise en prise de surface de l'élément de recouvrement (20) ; et
lorsque le cylindre de verrouillage (60) est positionné dans un état verrouillé, le disque rotatif (40) tourne autour de la paroi interne (23) de l'élément de recouvrement (20), de telle sorte que l'au moins une rainure (42) du disque rotatif (40) ne soit pas radialement alignée avec l'au moins un premier canal (25) de la paroi interne (23),
permettant ainsi à l'au moins un élément roulant (30) de se déplacer radialement vers l'intérieur par rapport à l'axe longitudinal (X), depuis l'au moins une rainure (42) du disque rotatif (40) jusqu'à l'intersection entre l'arbre creux (12) et l'au moins un premier canal (25),
verrouillant ainsi l'élément (10) de mise en prise de surface sur l'élément de recouvrement (20), et dans lequel l'arbre creux (12) comprend en outre une rainure annulaire (14) adaptée pour recevoir l'au moins un élément roulant (30).

2. Dispositif de verrouillage (1) selon la revendication 1, dans lequel l'arbre creux (12) s'étend perpendiculairement depuis la base (11) de l'élément (10) de mise en prise de surface.

3. Dispositif de verrouillage (1) selon l'une quelconque des revendications précédentes, dans lequel le disque rotatif (40) entoure radialement la paroi interne (23) de l'élément de recouvrement (20).

4. Dispositif de verrouillage (1) selon l'une quelconque des revendications précédentes, dans lequel la paroi externe (21) entoure radialement le disque rotatif (40).

5. Dispositif de verrouillage (1) selon l'une quelconque des revendications précédentes, dans lequel l'au moins une rainure (42) du disque rotatif (40) et l'au moins un premier canal (25) de la paroi interne (23) sont radialement alignés sur le même plan.

6. Dispositif de verrouillage (1) selon l'une quelconque des revendications précédentes, dans lequel l'au moins un premier canal (25) comprend une butée.

7. Dispositif de verrouillage (1) selon l'une quelconque des revendications précédentes, dans lequel la paroi externe (21) de l'élément de recouvrement (20) comprend en outre au moins un second canal (27) agencé pour s'aligner radialement avec l'au moins un premier canal (25) de telle sorte que l'au moins un élément roulant (30) soit mobile depuis l'au moins un second canal (27) jusqu'au premier canal (25), à condition que le disque rotatif (40) ne soit pas inséré dans le premier espace (22) de l'élément de recouvrement (20).

8. Dispositif de verrouillage (1) selon l'une quelconque des revendications précédentes, dans lequel l'au moins un élément roulant (30) est une sphère.

9. Dispositif de verrouillage (1) selon l'une quelconque des revendications précédentes, dans lequel le cylindre de verrouillage (60) est sensiblement parallèle à l'axe longitudinal (X) de l'arbre creux (12) et agencé au moins partiellement entre la paroi externe (21) et la paroi interne (23).

10. Dispositif de verrouillage (1) selon l'une quelconque des revendications précédentes, dans lequel l'élément (10) de mise en prise de surface comprend en outre un drain (16).

11. Dispositif de verrouillage (1) selon l'une quelconque des revendications précédentes, dans lequel le cylindre de verrouillage (60) comprend en outre une came (62) reliant fonctionnellement le cylindre de verrouillage (60) au disque rotatif (40).

12. Dispositif de verrouillage (1) selon l'une quelconque des revendications précédentes, dans lequel le dispositif de verrouillage (20) comprend en outre une manille (50).

13. Dispositif de verrouillage (1) selon l'une quelconque des revendications précédentes, dans lequel l'état déverrouillé et l'état verrouillé sont obtenus en faisant tourner le cylindre de verrouillage (60) avec un actionneur, tel qu'une clé.

14. Dispositif de verrouillage (1) selon l'une quelconque des revendications précédentes, dans lequel l'élément (10) de mise en prise de surface et l'élément de recouvrement (20) présentent une paroi externe (21) sensiblement cylindrique.

15. Dispositif de verrouillage (1) selon l'une quelconque des revendications précédentes, dans lequel la paroi externe (21) de l'élément de recouvrement (20) peut tourner autour de l'axe longitudinal (X) de l'arbre creux (12).

16. Dispositif de verrouillage (1) selon l'une quelconque des revendications précédentes, dans lequel la paroi externe (21), la paroi interne (23), le disque rotatif (40) et l'arbre creux (12) sont agencés de manière coaxiale.

17. Dispositif de verrouillage (1) selon l'une quelconque des revendications précédentes, dans lequel la paroi externe (21), la paroi interne (23), le disque rotatif (40) et l'arbre creux (12) présentent une forme annulaire.
